# EUROPEAN PATENT SPECIFICATION

(11) **EP 3 140 355 B1**
(45) Date of publication and mention of the grant of the patent: **11.07.2018**
(21) Application number: 15720889.3
(22) Date of filing: 27.04.2015
(51) Int. Cl.: C09D 5/00

(54) **ARTICLE WITH HARDCOAT AND METHOD OF MAKING THE SAME**
ARTIKEL MIT HARTBESCHICHTUNG UND HERSTELLUNGSVERFAHREN DAFÜR
ARTICLE COMPORTANT UNE COUCHE DURE, ET SON PROCÉDÉ DE FABRICATION

(30) Priority: 09.05.2014 US 201461991124 P
(43) Date of publication of application: 15.03.2017
(73) Proprietor: 3M Innovative Properties Company, St. Paul, MN 55133-3427 (US)
(72) Inventor: PADIYATH, Raghunath, Saint Paul, Minnesota 55133-3427 (US); SUGIYAMA, Naota, Tokyo 141-8684 (JP); POKORNY, Richard J., Saint Paul, Minnesota 55133-3427 (US); YU, Ta-Hua, Saint Paul, Minnesota 55133-3427 (US); KING, Gregory F., Saint Paul, Minnesota 55133-3427 (US); MAKI, Stephen P., Saint Paul, Minnesota 55133-3427 (US); OWINGS, Robert R., Saint Paul, Minnesota 55133-3427 (US)
(74) Representative: Herzog, Fiesser & Partner Patentanwälte PartG mbB
(86) International application number: PCT/US2015/027707
(87) International publication number: WO 2015/171340

(56) References cited:
- EP-A2- 1 460 045
- WO-A1-2005/103175
- WO-A2-2007/121091
- US-A1- 2005 203 202

## Description

### Cross Reference To Related Application

This application claims the benefit of U.S. Provisional Patent Application Number 61/991124, filed May 9, 2014, the disclosure of which is incorporated by reference herein in its entirety.

### Background

Dyed and vacuum-coated plastic films have been applied to windows to reduce heat load due to sunlight. To reduce heat load, solar transmission is blocked in either the visible or the infrared portions of the solar spectrum (i.e., at wavelengths ranging from 400 nm to 2500 nm or greater).

WO2007/121091 reports a free-radically curable composition comprising a fluoroalkyl silicone having at least two ethylenically unsaturated groups, silicone having at least two Si-H, a polyethylenically unsaturated component having at least two ethylenicallyunsaturated groups, a hydrosilylation catalyst, and a free radical initiator.

WO2005/103175 reports radiation curable coating compositions, to coatings formed by curing these compositions, to processes for preparing such coatings, to articles comprising such coatings, and to antireflective coating systems.

US2005/203202 reports environmentally friendly, substantially all solids coating compositions which are curable using ultraviolet and visible radiation. In addition, the disclosed coating compositions are suitable for coating composite objects and/or objects comprising composite materials, such as fiberglass, fire retardant fiberglass, carbon fiber, fire retardant carbon fiber. Kevlar®, and fire retardant Kevlar®.

EP1460045 reports a light curable anti-glare coating liquid composition for coating onto a transparent substrate and which comprises a dispersion of nanoparticles of a mineral oxide suspended in a mixture of at least one acrylate - functional resin, at least one compatible solvent, at least one incompatible solvent that has a lower volatility than the compatible solvent, and a surfactant that has poor or limited compatibility with the dispersion. The substrate is typically a UV absorbing polymeric film and the coated films in use forms a fade protector for use in a glazed frame to protect documents, prints etc. on display from the ravages of light.

Primarily through absorption, dyed films can control the transmission of visible light and consequently provide glare reduction. However, dyed films generally do not block near-infrared solar energy and consequently are not completely effective as solar control films. Dyed films also often fade with solar exposure. In addition, when films are colored with multiple dyes, the dyes often fade at different rates, causing an unwanted color changes over the life of the film.

Other known window films include those fabricated using vacuum-deposited grey metals (e.g., stainless steel, inconel, monel, chrome, and nichrome alloys). The deposited grey metal films offer about the same degrees of transmission in the visible and infrared portions of the solar spectrum. As a result, the grey metal films are an improvement over dyed films with regard to solar control. The grey metal films are relatively stable when exposed to light, oxygen, or moisture, and in those cases in which the transmission of the coatings increases due to oxidation, color changes are generally not detectable. After application to clear glass, grey metals block light transmission by approximately equal amounts of solar reflection and absorption.

Vacuum-deposited layers such as silver, aluminum, and copper control solar radiation primarily by reflection and are useful only in a limited number of applications due to the high level of visible reflectance. A modest degree of selectivity (i.e., higher visible transmission than infrared transmission) is afforded by certain reflective materials, such as copper and silver, when bound on either side by a dielectric layers such as indium tin oxide.

Low emissivity coatings have been used to reduce the radiative heat transfer in building windows. Typically, a semi-transparent metal appropriately bound on either side by dielectric layers is used to obtain high visible light transmission, high near infrared reflection and low emissivity. Since these layers are prone to degradation by atmospheric elements, they need to be protected by relatively thick polymeric films.

A variety of hardcoat materials are available to protect substrates, including plastic substrates that have a tendency to scratch in normal use. Examples of hardcoat materials include those made of binder (e.g., acrylates) and SiO₂ nanoparticles modified by photocurable silane coupling agent. In addition to scratch resistance, flexibility is also a desirable feature of hardcoat materials for some applications, although typically increasing flexibility tends to decrease the scratch resistance of a hardcoat material. Application of polymeric or other infrared absorbing coatings over the low emissivity layers increases the emissivity of the surface negating the utility of these coatings as transparent insulating films in window applications.

There is a continuing need for high visible light transmission (i.e., > 70%) and low emissivity (i.e., less than 0.2) window films that are scratch resistant. There is also typically a desire that the window films are resistant to atmospheric elements.

### Summary

In one aspect, the present disclosure describes an article comprising:
a substrate having a first major surface, wherein the major surface has an emissivity not greater than 0.2 (in some embodiments, not greater than 0.15, or even not greater than 0.1); and
an exposed hardcoat on the first major surface, the hardcoat comprising binder, wherein the binder typically comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant), and
wherein the exposed hardcoat has a thickness less than 200 nanometers (in some embodiments, less than 150 nanometers, or even less than 100 nanometers) and has a scratch rating of not greater than 1 as determined by the Linear Abrasion Test in the Examples.

In another aspect, the present disclosure describes a method of making an article described herein, the method comprising:
providing a substrate having a first major surface, wherein the major surface has an emissivity not greater than 0.2 (in some embodiments, not greater than 0.15, or even not greater than 0.1);
coating a mixture onto the first major surface, the mixture comprising at least one of acrylic, (meth)acrylic oligomer, or monomer binder in a range from 5 weight % to 60 weight %, wherein the binder typically comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant), and nanoparticles in a range from 40 to 95 (in some embodiments, in a range from 30 to 85) weight percent, based on the total weight of the mixture, and wherein the nanoparticles have an average particle diameter in a range from 2 nm to 100 nm; and
curing the at least one of acrylic, (meth)acrylic oligomer, or monomer binder to provide the article.

In another aspect, the present disclosure describes a method of making an article described herein, the method comprising:
providing a substrate having a first major surface, wherein the major surface has an emissivity not greater than 0.2 (in some embodiments, not greater than 0.15, or even not greater than 0.1);
coating at least one of acrylic, (meth)acrylic oligomer, or monomer binder onto the major surface, wherein the binder typically comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant); and
curing the at least one of acrylic, (meth)acrylic oligomer, or monomer binder to provide the article.

Articles described herein are useful, for example, for sun control window films having insulative properties. Such films are applied on the interior or exterior surfaces of automotive windows or building fenestrations.

### Brief Description of the Drawings

FIGS. 1A and 1B show the transmittance and reflectivity, respectively, of CE-1 versus wavelength, CE-2, and EX-3, respectively, versus wavelength.
FIGS. 2A and 2B show the transmittance and reflectivity, respectively, of CE-2 versus wavelength.
FIGS. 3A and 3B show the transmittance and reflectivity, respectively, of EX-3 versus wavelength.

### Detailed Description

Exemplary binders include acrylics (e.g., silicone acrylate), (meth)acrylic oligomers, or monomers (e.g., a fluoroacrylate), and are commercially available, for example, from Arkema Group, Clear Lake, TX, under the trade designation "SARTOMER". Exemplary surfactants include those available under the trade designations "KYI203" from Shin-Etsu Chemical Co., Tokyo, Japan, and "TEGORAD 2500" from Evonik Industries AG, Mobile, AL.

In some embodiments, the exposed hardcoat further comprises nanoparticles in a range from 40 to 95 (in some embodiments, in a range from 30 to 85) weight percent, based on the total weight of the exposed hardcoat, and wherein the nanoparticles have an average particle diameter in a range from 2 nm to 100 nm.

In some embodiments, the ratio of average particle diameters of nanoparticles having an average particle diameter in the range from 2 nm to 20 nm to average particle diameters of nanoparticles having an average particle diameter in the range from 20 nm to 100 nm is in a range from 1:2 to1:200.

Exemplary nanoparticles include SiO₂, ZrO₂, or Sb doped SnO₂ nanoparticles. SiO₂ nanoparticles are commercially available, for example, from Nissan Chemical Industries, Ltd., Tokyo, Japan; C. I. Kasei Company, Limited, Tokyo, Japan; and Nalco Company, Naperville, IL. ZrO₂, nanoparticles are commercially available, for example, from Nissan Chemical Industries. Sb doped SnO nanoparticles are commercially available, for example, from Advanced Nanoproducts, Sejong-si, South Korea.

Exemplary nanoparticles include SiO₂ or ZrO₂ nanoparticles. The nanoparticles can consist essentially of or consist of a single oxide such as silica, or can comprise a combination of oxides, or a core of an oxide of one type (or a core of a material other than a metal oxide) on which is deposited an oxide of another type. The nanoparticles are often provided in the form of a sol containing a colloidal dispersion of inorganic oxide particles in liquid media. The sol can be prepared using a variety of techniques and in a variety of forms including hydrosols (where water serves as the liquid medium), organosols (where organic liquids so serve), and mixed sols (where the liquid medium contains both water and an organic liquid).

Aqueous colloidal silicas dispersions are commercially available, for example, from Nalco Chemical Co., Naperville, IL, under the trade designation "NALCO COLLODIAL SILICAS" such as products 1040, 1042, 1050, 1060, 2327, 2329, and 2329K or Nissan Chemical America Corporation, Houston, TX, under the trade designation "SNOWTEX". Organic dispersions of colloidal silicas are commercially available, for example, from Nissan Chemical under the trade designation "ORGANOSILICASOL". Suitable fumed silicas include products commercially available, for example, from Evonik DeGussa Corp., Parsippany, NJ, under the trade designation, "AEROSIL SERIES OX-50", as well as product numbers -130, -150, and -200. Fumed silicas are also commercially available, for example, from Cabot Corp., Tuscola, IL, under the trade designations "CAB-O-SPERSE 2095", "CAB-O-SPERSE A105", and "CAB-O-SIL M5".

It may be desirable to employ a mixture of oxide particle types to optimize an optical property, material property, or to lower that total composition cost.

In some embodiments, the hardcoat may comprise various high refractive index inorganic nanoparticles. Such nanoparticles have a refractive index of at least 1.60, 1.65, 1.70, 1.75, 1.80, 1.85, 1.90, 1.95, 2.00 or higher. High refractive index inorganic nanoparticles include zirconia ("ZrO₂"), titania ("TiO₂"), antimony oxides, alumina, tin oxides, alone or in combination. Mixed metal oxides may also be employed.

Zirconias for use in the high refractive index layer are available, for example, from Nalco Chemical Co. under the trade designation "NALCO OOSSOO8", Buhler AG, Uzwil, Switzerland, under the trade designation "BUHLER ZIRCONIA Z-WO SOL" and Nissan Chemical America Corporation under the trade designation "NANOUSE ZR". Zirconia nanoparticles can also be prepared such as described, for example, in U.S. Pat Nos. 7,241,437 (Davidson et al.) and 6,376,590 (Kolb et al.). A nanoparticle dispersion that comprises a mixture of tin oxide and zirconia covered by antimony oxide (RI ∼1.9) is commercially available, for example, from Nissan Chemical America Corporation under the trade designation "HX-05M5". A tin oxide nanoparticle dispersion (RI ∼2.0) is commercially available, for example, from Nissan Chemicals Corp. under the trade designation "CX-S401M".

Substrates having a major surface having an emissivity not greater than 0.2 (in some embodiments, not greater than 0.15, or even not greater than 0.1) can be made by techniques known in the art (see, e.g., U.S. Pat. Nos. 5,344,718 (Hartig et al.) and 5,776,603 (Zagdoun et al.)). Exemplary surfaces having an emissivity not greater than 0.2 include those comprising at least one of a metal oxide (e.g., indium oxide), metal nitride (e.g., silicon nitride), or metal oxynitride (e.g., siliconoxynitride) and at least one of silver, gold, palladium, or copper. For example, surfaces having an emissivity not greater than 0.2 (in some embodiments, not greater than 0.15, or even not greater than 0.1) include those comprising at least one of a metal oxide (e.g., indium oxide, metal nitride (e.g., silicon nitride), or metal oxynitride (e.g., siliconoxynitride)) and at least one of silver, gold, palladium, or copper.

Examples of substrates on which the major surface has an emissivity not greater than 0.2 (in some embodiments, not greater than 0.15, or even not greater than 0.1) include substrates comprising the following layers, typically in the following order:
(a) an emissivity layer (in some embodiments, having a thickness in a range from 7 nm to 15 nm and a polyester film (in some embodiments, having a thickness in a range from 50 micrometers to 100 micrometers));
(b) cured acrylate layer (in some embodiments, having a thickness in a range from 10 nm to 200 nm), aluminum doped zinc oxide (in some embodiments, having a thickness in a range from 1 nm to 25 nm), silver-gold alloy (e.g., 15 weight percent gold, 85 weight percent silver) (in some embodiments, having a thickness in a range from 7 nm to 15 nm), aluminum doped zinc oxide (in some embodiments, having a thickness in a range from 1 nm, to 25 nm), a silicon oxide, silicon nitride or, silicon oxynitride layer or similar dielectric layer (in some embodiments, having a thickness in a range from 15 nm to 40 nm), and a flash evaporated acrylate layer cured by electron beam or ultraviolet radiation (in some embodiments, having a thickness in a range from 500 nm to 2500 nm);
(c) aluminum doped zinc oxide (in some embodiments, having a thickness in a range from 1 nm to 25 nm), silver-gold alloy (e.g., 15 weight percent gold, 85 weight percent silver) (in some embodiments, having a thickness in a range from 7 nm to 15 nm), aluminum doped zinc oxide (in some embodiments, having a thickness in a range from 1 nm to 25 nm) silicon oxide, silicon nitride or silicon oxynitride layer (in some embodiments, having a thickness in a range from 15 nm to 40 nm), and cured acrylate layer (in some embodiments, having a thickness in a range from 500 nm to 2500 nm); and
(d) a polyethylene terephthalate (PET) film (in some embodiments, having a thickness in a range from 10 micrometers to 130 micrometers), an indium tin oxide (ITO) layer (in some embodiments, having a thickness in a range from 5 nm to 50 nm), a silver layer (in some embodiments, having a thickness in a range from 7 nm to 20 nm), and an ITO layer (in some embodiments, having a thickness in a range from 5 nm to 50 nm).

One exemplary substrate having a surface having an emissivity not greater than 0.2 comprises a polyethylene terephthalate (PET) film (e.g., a 76.2 micrometer (3 mil) thick (available from DuPont, Chester, VA, USA, under designation "MELINEX454")), an ITO layer, (e.g., about 35 nm thick), a silver layer (e.g., about 12 nm), and an ITO layer (e.g., about 35 nm).

The layers can be deposited using techniques in the art, including DC magnetron sputtering process.

In some embodiments, articles described herein further comprising a primer layer between the substrate and the exposed hardcoat. Exemplary primers include polyvinylidene chloride, cross-linked acrylic polymers. Techniques for applying the primer layer are known in the art, and include roll coating, gravure coating, and wire wound rod coating.

In one exemplary method for making exemplary articles described herein, the method comprises:
providing a substrate having a first major surface, wherein the major surface has an emissivity not greater than 0.2 (in some embodiments, not greater than 0.15, or even not greater than 0.1);
coating a mixture onto the first major surface, the mixture comprising at least one of acrylic, (meth)acrylic oligomer, or monomer binder in a range from 5 weight % to 60 weight %, wherein the binder comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant), and nanoparticles in a range from 40 to 95 (in some embodiments, in a range from 30 to 85) weight percent, based on the total weight of the mixture, and wherein the nanoparticles have an average particle diameter in a range from 2 nm to 100 nm; and
curing (e.g., actinic radiation (e.g., ultraviolet or e-beam)) at least one of the acrylic, (meth)acrylic oligomer, or monomer binder to provide the article.

In one exemplary method exemplary articles described herein can be made comprising:
providing a substrate having a first major surface, wherein the major surface has an emissivity not greater than 0.2 (in some embodiments, not greater than 0.15, or even not greater than 0.1);
coating at least one of acrylic, (meth)acrylic oligomer, or monomer binder onto the major surface, wherein the binder typically comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant); and
curing (e.g., actinic radiation (e.g., ultraviolet or e-beam)) the at least one of acrylic, (meth)acrylic oligomer, or monomer binder to provide the article. In some embodiments, coating the monomer binder onto the major surface is done via vapor deposition of the monomer.

In some embodiments, exposed hardcoats described herein have a thickness less than 200 nanometers (in some embodiments, less than 150 nanometers, or even less than 100 nanometers).

In some embodiments, articles described herein have a corrosion rating of not more than 3 (in some embodiments, not more than 2, not more than 1, or even 0) as determined by the Corrosion Test in the Examples.

Articles described herein are useful, for example, for sun control window films having insulative properties. Such films are applied on the interior or exterior surfaces of automotive windows or building fenestrations.

### Exemplary Embodiments

1A. An article comprising:
   a substrate having a first major surface, wherein the major surface has an emissivity not greater than 0.2 (in some embodiments, not greater than 0.15, or even not greater than 0.1); and
   exposed hardcoat on the first major surface, the exposed hardcoat comprising binder, wherein the binder typically comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant), and wherein the exposed hardcoat has a thickness less than 200 nanometers (in some embodiments, less than 150 nanometers, or even less than 100 nanometers) and has a scratch rating of not greater than 1 as determined by the Linear Abrasion Test in the Examples.
2A. The article of Exemplary Embodiment 1A, wherein the exposed hardcoat further comprises nanoparticles in a range from 40 to 95 (in some embodiments, in a range from 30 to 85) weight percent, based on the total weight of the exposed hardcoat, and wherein the nanoparticles have an average particle diameter in a range from 2 nm to 100 nm.
3A. The article of Exemplary Embodiment 2A, wherein the ratio of average particle diameters of nanoparticles having an average particle diameter in the range from 2 nm to 20 nm to average particle diameters of nanoparticles having an average particle diameter in the range from 20 nm to 100 nm is in a range from 1:2 to 1:200.
4A. The article of either Exemplary Embodiment 2A or 3A, wherein the nanoparticles include at least one of SiO₂, ZrO₂, or Sb doped SnO₂ nanoparticles.
5A. The article of any of Exemplary Embodiments 2A to 4A, wherein the nanoparticles include modified nanoparticles.
6A. The article of any preceding A Exemplary Embodiment, wherein the binder comprises cured acrylate.
7A. The article of any preceding A Exemplary Embodiment, wherein the low emissivity surface comprises at least one of a metal oxide (e.g., indium oxide), metal nitride (e.g., silicon nitride), or metal oxynitride (e.g., silicon oxynitride) and at least one of silver, gold, palladium, or copper.
8A. The article according to any of preceding A Exemplary Embodiment, further comprising a primer layer between the substrate and the exposed hardcoat.
9A. The article of any preceding A Exemplary Embodiment having a corrosion rating of not more than 3 (in some embodiments, not more than 2, not more than 1, or even 0) as determined by the Corrosion Test in the Examples.
1B. A method of making the article of any of Exemplary Embodiments 2A to 9A comprising nanoparticles, the method comprising:
   providing a substrate having a first major surface, wherein the major surface has an emissivity not greater than 0.2 (in some embodiments, not greater than 0.15, or even not greater than 0.1);
   coating a mixture onto the first major surface, the mixture comprising at least one of acrylic, (meth)acrylic oligomer, or monomer binder in a range from 5 weight % to 60 weight percent, wherein the binder typically comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant), and nanoparticles in a range from 40 to 95 (in some embodiments, in a range from 30 to 85) weight percent, based on the total volume of the mixture, and wherein the nanoparticles have an average particle diameter in a range from 2 nm to 100 nm; and
   curing the at least one of acrylic, (meth)acrylic oligomer, or monomer binder to provide the article.
2B. The method of Exemplary Embodiment 1B, wherein the curing includes actinic radiation (e.g., ultraviolet or e-beam).
3B. A method of making the article of any of Exemplary Embodiments 1A or 6A to 9A not including nanoparticles, the method comprising:
   providing a substrate having a first major surface, wherein the major surface has an emissivity not greater than 0.2 (in some embodiments, not greater than 0.15, or even not greater than 0.1);
   coating at least one of acrylic, (meth)acrylic oligomer, or monomer binder onto the major surface, wherein the binder typically comprises surfactant (in some embodiments the binder comprises at least 5, 6, 7, 8, 9, 10, 15, 20, or even at least 25 percent surfactant; in some embodiments in a range from 5 to 15, or even from 10 to 25 percent surfactant, based on the total weight of the binder including the surfactant); and
   curing the at least one of acrylic, (meth)acrylic oligomer, or monomer binder to provide the article.
4B. The method of Exemplary Embodiment 3B, wherein coating the monomer binder onto the major surface is done via condensation deposition of the monomer.
5B. The method of Exemplary Embodiment 3B, wherein the curing includes actinic radiation (e.g., ultraviolet or e-beam).

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### EXAMPLES

### Materials

| **Chemical** | **Description** | **Source** |
|---|---|---|
| "A-174" | 3-methacryloxypropyl-trimethoxysilane | obtained from Alfa Aesar, Ward Hill, MA, under trade designation "SILQUEST™ A-174" |
| "4H-2,2,26,6-TMP 1-O" | 4-hydroxy-2,2,6,6-tetramethylpiperidine 1-oxyl (5 wt. %) | obtained from Aldrich Chemical Company, Milwaukee, WI, under trade designation "PROSTAB" |
| "NALCO 2326" | 5 nm diameter SiO₂ sol | obtained from Nalco Company, Naperville, IL, under trade designation "NALCO 2326" |
| "NALCO 2327" | 20 nm diameter SiO₂ sol | obtained from Nalco Company under trade designation "NALCO 2327" |
| "NALCO 2329" | 75 nm diameter SiO₂ sol | obtained from Nalco Company under trade designation "NALCO 2329" |
| "SR368" | tris(2-hydroxy ethyl) isocyanurate triacrylate | obtained from Arkema Group, Clear Lake, TX, under trade designation "SARTOMER SR368" |
| "KRM8762" | Acid modified epoxy acrylate | obtained from Daicel-Allnex, Ltd., Tokyo, Japan under trade designation "KRM8762" |
| "KY1203" | UV/EB curable fluorinated surfactant | obtained from Shin-Etsu Chemical Co., Tokyo, Japan, under trade designation "KY-1203" |
| "ESACURE 1" | Difunctional alpha hydroxyketone | obtained from Lamberti, Gallarate, Italy, under trade designation "ESACURE ONE" |
| "ASPU-112" | Alkoxy silane modified polyurethane | obtained from DIC Corp., Tokyo, Japan under trade designation "ASPU-112" |
| "TEGORAD 2250" | Leveling agent | obtained from Evonik Industries AG, Mobile, AL, under trade designation "TEGORAD 2250" |
| "IRGACURE 127" | Photoinitiator | obtained from BASF, Vandalia, IL, under trade designation "IRGACURE 127" |
| "MEK" | Methyl ethyl ketone, solvent | obtained from Aldrich Chemical Company |
| 1-methoxy-2-propanol | Solvent | obtained from Aldrich Chemical Company |
| "SARTOMER SR833" | Acrylate | obtained from Arkema Group under trade designation "SARTOMER SR-833" |
| "CN 147" | Acidic acrylate oligomer | obtained from Arkema Group under trade designation "SARTOMER CN 147" |
| "CN 120" | Epoxy acrylate | obtained from Arkema Group under trade designation "SARTOMER CN 120" |
| "EBECRYL 8301" | Aliphatic Urethane Hexaacrylate | Obtained from Allnex Americas, Alpharetta, GA |
| 4-Hydroxy-2,2,6,6-tetramethylpiperidine 1-Oxyl | Free radical inhibitor | obtained from Aldrich Chemical |
| Sodium chloride | | obtained from Aldrich Chemical Company |
| Glacial acetic acid | | obtained from Aldrich Chemical Company |
| Ammonium sulfide | | obtained from Aldrich Chemical Company |
| Silicon-Aluminum | Silicon-Aluminum (90:10) alloy sputtering target | obtained from Soleras, Biddeford, ME |
| AZO | Aluminum doped Zinc Oxide sputtering target | obtained from DHF Technical Products, Rio Rancho, NM |
| Silver-Gold | Silver-Gold (85:15) alloy sputtering target | obtained from DHF Technical Products |

### Test Methods

The samples prepared according to Examples and Comparative Examples described below were applied on 3 mm-thick float glass panels and evaluated for their performance as described below.

### Method for Measuring Visible Light Transmittance

Transmittance of the sample was measured by using UV-Vis-NIR spectrometer (obtained under the trade designation "V-570" from JASCO Corp., Tokyo, Japan) for the wavelength region from 300 nm to 2500 nm. The average value in the wavelength region from 380 nm to 780 nm was calculated per JIS A5759 6.3 (2008), the disclosure of which is incorporated herein by reference.

### Method for Determining Far-Infrared Reflectance

Far-infrared reflectance of the sample at incident angle 10 degree was measured by FTIR spectrometer (obtained under the trade designation "FTIR-420" from JASCO Corp.) with specular reflectance accessory (obtained under the trade designation "RF-81S" from JASCO Corp.). Aluminum mirror (obtained under the trade designation "TFAN-20C03-10" from Sigma Koki Co., LTD., Tokyo, Japan) was used as a reflectance standard. The reflectance was measured at the outmost surface of the film. The average value in the wavelength region from 5 micrometers to 50 micrometers was calculated per JIS R3106 7 (1998), the disclosure of which is incorporated herein by reference.

### Method for Measuring Shading Coefficient

Reflectance of the sample was measured for the wavelength region from 300 nm to 2500 nm by using a V-570 spectrometer with specular reflectance accessory (obtained under the trade designation "SLM-468" from JASCO Corp.) and Al standard mirror (obtained under the trade designation "6217-H101A" from JASCO Corp.). Solar radiation transmittance was calculated from the transmittance from 300 nm to 2500 nm per JIS A5759 6.4 (2008), the disclosure of which is incorporated herein by reference. Solar radiation reflectance was calculated from the reflectance from 300 nm to 2500 nm according to JIS A5759 6.4 (2008), the disclosure of which is incorporated herein by reference. Emissivity was calculated from the far-infrared light reflectance according to JIS R3106 7 (1998), the disclosure of which is incorporated herein by reference. In some instances, emissivity was measured in accordance with ASTM C1371-04a (2010) e1, the disclosure of which is incorporated herein by reference, using a portable emissometer available from Devices and Services (Model AE1), Dallas, TX. Generally, a close match (± 0.03 units) between the two methods was obtained.

Shading coefficient was calculated from the solar radiation transmittance, the solar radiation reflectance and the emissivity per JIS A5759 6.4 (2008), the disclosure of which is incorporated herein by reference. Shading coefficient and other solar optical properties was also calculated in accordance with National Fenestration Rating Council (NFRC) test method 300-2004. Generally, a close match (± 0.02 units) between the two methods was obtained.

### Method for Determining Heat Transmission Coefficient (U Value)

Heat transmission coefficient (U value) was calculated from the emissivity of the sample per JIS A5759 6.5 (2008), the disclosure of which is incorporated herein by reference. U-value was also determined using the software available for download from http://windows.lbl.gov/software/window/window.html. Generally, a close match (± 0.3 W/m²K) between the two methods is obtained.

### Method for Determining Color Coordinates

Transmitted or reflected color of the coated film was measured using a commercially available instrument obtained under the trade designation "ULTRASCAN-PRO" from Hunter Associates Laboratory, Inc., Reston, VA.

### Method for Determining Abrasion Resistance ("Linear Abrasion Test")

The scratch resistance of hardcoated PET film was evaluated by observing and rating the scratched specimen in accordance with the Table 1, below. The abrasion was conducted using 30 mm-diameter #0000 steel wool pads (obtained under the trade designation "MAGIC SAND", - #0000 Grade, Item #1113 from Hut Products, Fulton, MO) adapted to fit a linear abrader (Model 5750 obtained from Taber Industries, Tonawanda, NY). A load of 530 grams was used for 10 passes at 30 strokes per min. The scratched samples were evaluated for scratches after the test and rated according to the Table 1, below.

**Table 1.**

| Observation | Rating |
|---|---|
| No scratches | 0 |
| A few very faint scratches only observed in reflection | 1 |
| Several faint scratches | 2 |
| Several faint a few deep scratches | 3 |
| Large number of deep scratches easily observed in reflected or transmitted light. Almost complete removal of coating. | 4 |

### Method for Determining Corrosion Rating ("Corrosion Test")

A 5% solution of sodium chloride in distilled (DI) water, 1wt. % solution of glacial acetic acid in distilled water and 1% solution of ammonium sulfide were used as the corrosive agents to test the corrosion resistance of the coatings. A few drops of the corrosive agents were placed on the surface of the coating to be tested and covered with a watch glass and left overnight in a fume hood. Generally, these agents evaporated overnight leaving behind some residue (salt in the case of sodium chloride solution). The samples were washed under running distilled water and air dried. The area where the drops were placed was observed carefully and the level of corrosion noted. The samples were rated according to Table 2, below.

**Table 2.**

| Observation | Rating |
|---|---|
| 0 | No evidence of droplet contact |
| 1 | Evidence of droplet contact only detectable under very close scrutiny |
| 2 | Slight haze in the droplet contact area |
| 3 | Moderate haze in the contact area (i.e., there some haze, but it is difficult to see) |
| 4 | Significant surface haze in droplet contact area, but still no discoloration |
| 5 | Significant surface haze, very mild discoloration |
| 6 | Moderate discoloration easily detectable |
| 7 | Significant discoloration, very slight metal layer loss |
| 8 | Significant discoloration, moderate metal layer loss |
| 9 | Nearly complete metal layer loss in droplet contact area |
| 10 | Metal layer loss or discoloration throughout entire test coupon |

### Preparation of Surface Modified Silica Sol (Sol-1)

5.95 grams of silica sol ("A-174") and 0.5 gram of 4-Hydroxy-2,2,6,6-tetramethylpiperidine 1-Oxyl ("4H-TEMPO-I") were added to the mixture of 400 grams silica sol ("NALCO 2329") and 450 grams of 1-methoxy-2-propanol in a glass jar with stirring at room temperature for 10 minutes. The jar was sealed and placed in an oven at 80°C for 16 hours. Then, the water was removed from the resultant solution with a rotary evaporator at 60°C until the solid content of the solution was about 45 wt. %. 200 grams of 1-methoxy-2-propanol was charged into the resultant solution, and then remaining water was removed by using the rotary evaporator at 60°C. This latter step was repeated for a second time to further remove water from the solution. Finally, the concentration of total SiO₂ nanoparticles was adjusted to 45 wt. % by adding 1-methoxy-2-propanol to result in the SiO₂ sol containing surface modified SiO₂ nanoparticles with an average size of 75 nm.

### Preparation of Surface Modified Silica Sol (Sol-2)

25.25 grams of 3-methacryloxypropyl-trimethoxysilane ("A-174") and 0.5 gram of 4-Hydroxy-2,2,6,6-tetramethylpiperidine 1-Oxyl ("4H-TEMPO-I") were added to the mixture of 400 grams of silica sol ("NALCO 2327") and 450 grams of 1-methoxy-2-propanol in a glass jar with stirring at room temperature for 10 minutes. The jar was sealed and placed in an oven at 80°C for 16 hours. Then, the water was removed from the resultant solution with a rotary evaporator at 60°C until the solid content of the solution was about 45 wt.%. 200 grams of 1-methoxy-2-propanol was charged into the resultant solution, and then remaining water was removed by using the rotary evaporator at 60°C. This latter step was repeated for a second time to further remove water from the solution. Finally, the concentration of total SiO₂ nanoparticles was adjusted to 45 wt.% by adding 1-methoxy-2-propanol to result in the SiO₂ sol containing surface modified SiO₂ nanoparticles with an average size of 20 nm.

### Preparation of Surface Modified Silica Sol (Sol-3)

28.64 grams of 3-methacryloxypropyl-trimethoxysilane ("A-174") and 0.5 gram of 4-Hydroxy-2,2,6,6-tetramethylpiperidine 1-Oxyl ("4H-TEMPO-I") were added to the mixture of 400 grams of NALCO 2326 and 450 grams of 1-methoxy-2-propanol in a glass jar with stirring at room temperature for 10 minutes. The jar was sealed and placed in an oven at 80°C for 16 hours. Then, the water was removed from the resultant solution with a rotary evaporator at 60°C until the solid wt.% of the solution was about 21.2 wt.%. 200 grams of 1-methoxy-2-propanol was charged into the resultant solution, and then remaining water was removed by using the rotary evaporator at 60°C. This latter step was repeated for a second time to further remove water from the solution. Finally, the concentration of total SiO₂ nanoparticles was adjusted to 21.2 wt.% by adding 1-methoxy-2-propanol to result in the SiO₂ sol containing surface modified SiO₂ nanoparticles with an average size of 5 nm.

### Preparation of Hard Coat Precursor (HC-1)

4.326 grams of Sol-1, 2.330 grams of Sol-2, 0.799 gram of acrylate ("SARTOMER SR368"), 0.779 gram of acid modified epoxy acrylate ("KRM8762"), 1.331 gram of alkoxy silane modified polyurethane ("ASPU-112") were mixed. 0.01 grams of leveling agent ("TEGORAD 2250") and 0.15 gram of photoinitator ("IRGACURE 127") and 50.0 grams of MEK were added to the mixture. The mixture was adjusted to 5.15 wt. % solids by adding 1-methoxy-2-propanol and the hard coat precursor HC-1 was provided.

### Preparation of Hard Coat Precursor (HC-2)

4.65 grams of Sol-2, 0.835 gram of acrylate ("SARTOMER SR368"), 0.557 gram of acid modified epoxy acrylate ("KRM8762"), 0.696 gram of 20% solution of surfactant ("KY1203") in MEK, 0.104 gram of leveling agent ("TEGORAD 2500"), and 0.209 gram of difunctional alpha hydroxyketone ("ESACURE 1"), were added to 43 grams of 1-methoxy-2-propanol and 48.26 grams of MEK to provide hardcoat precursor HC-2.

### Preparation of Hard Coat Precursor (HC-3)

4.65 grams of Sol-2 and 1.392 grams of acrylate ("SARTOMER SR368") were mixed. 0.348 gram of leveling agent ("TEGORAD 2500") as the leveling agent and 0.209 gram of photoinitiator ("ESACURE 1") and 48.26 grams of MEK were added to the mixture. The mixture was adjusted to 4.0 wt.% in solids by adding 45.698 grams of 1-methoxy-2-propanol to provide hard coat precursor HC-3.

### Preparation of Hard Coat Precursor (HC-4)

4.65 grams of Sol-2 and 1.392 gram of acrylate ("SARTOMER SR368") were mixed. 0.696 gram of surfactant ("KY1203"), 0.14 gram of leveling agent ("TEGORAD 2500"), and 0.209 gram of photoinitiator ("ESACURE 1") and 48.26 grams of MEK were added to the mixture. The mixture was adjusted to 4.0 wt.% in solid by adding 45.12 grams of 1-methoxy-2-propanol to provide hard coat precursor HC-4.

### Preparation of Hard Coat Precursor (HC-5)

2.976 grams of Sol-2, the 3.544 grams of Sol-3, and 1.392 gram of aliphatic urethane hexaacrylate ("EBECRYL8301") were mixed. 0.348 gram of leveling agent ("TEGORAD 2500") and 0.209 gram of photoinitiator ("ESACURE 1") and 48.26 grams of MEK were added to the mixture. The mixture was adjusted to 4.0 wt.% in solid by adding 43.503 grams of 1-methoxy-2-propanol to provide hard coat precursor HC-5.

### Preparation of Hard Coat Precursor (HC-6)

3.968 grams of Sol-2, 4.725 grams of Sol-3, and 0.696 gram of epoxy acrylate ("CN 120") were mixed. 0.348 gram of leveling agent ("TEGORAD 2500") and 0.209 gram of photoinitiator ("ESACURE 1") and 48.206 grams of MEK were added to the mixture. The mixture was adjusted to 4.0 wt.% in solid by adding 42.35 grams of 1-methoxy-2-propanol to provide hard coat precursor HC-6.

### Comparative Examples 1 to 2 (CE-1 to CE-2) and Example 3 (EX-3)

CE-1 sample was a low emissive film (obtained from Nitto Denko Corp., Osaka, Japan under trade designation "PX7000A"). CE-2 sample was prepared by removing the top layer of the low emissive film ("PX7000A") (CE-1) sample using a 3M Scotch Tape to expose the metallic layer.

EX-3 sample was prepared by applying the CE-2 sample film on a soda lime glass plate of 50 mm × 150 mm ×3 mm. Then hardcoat precursor solution HC-1 was coated on the substrate by Meyer Rod # 4. After drying for 5 minutes at 60°C in air, the coated substrate was passed 2 times through a UV irradiator (Model DRS, H-bulb, obtained from Fusion UV System Inc., Gaithersburg, MD) under nitrogen gas. During irradiation, 900 mJ/cm², 700 mW/cm² of ultraviolet (UV-A) was totally irradiated on the coated surface. The thickness of the resulting hard-coat layer was 100-120nm.

### Comparative Example 4 (CE-4) and Examples 5 to 6 (EX-5 to EX-6)

CE-4 low emissivity substrate was obtained by following the general teachings of U.S. Pat. Pub. No. US2010/0316852 A1, the disclosure of which is incorporated herein by reference. A roll of 0.075 mm thick, 508 mm wide PET film (MELINEX™ 454 from DuPont Teijin Films, Chester, VA) was loaded into a roll to roll apparatus similar to one described in PCT Pub. No. WO2009085741, published October 1, 2009, the disclosure of which is incorporated herein by reference. The pressure in the chamber was reduced to 3x10⁻⁴ torr (0.04 Pa) and the drum 308 was chilled to -18°C. The PET film was exposed to plasma pretreatment using a titanium target magnetron run at 200 W DC in a nitrogen plasma. The plasma treated side of the PET film was then coated with degassed, flash- evaporated acrylate monomer mixture (94% SARTOMER SR833 acrylate and 6% CN147 acidic acrylate oligomer at a web speed of 7.2 ft/min. (2.2 m/min.). The monomer mixture was degassed by exposing it to a pressure of about 1x10⁻³ torr (0.13 Pa), and then flash-evaporated by pumping it through an ultrasonic atomizer into a vaporization chamber maintained at 274°C. The vaporized acrylate mixture was sprayed from the chamber onto the moving PET film where it condensed due to the low drum temperature. The condensed acrylate monomer mixture was then crosslinked with electron beam radiation in vacuum with the electron beam gun operated at 7.5 kV and 4 mA. The final thickness of the crosslinked acrylate base coat was approximately 1500 nm. A silicon oxynitride layer was coated on this crosslinked acrylate layer from a rotary silicon-aluminum target by reactively sputtering in the presence of oxygen (15%) and nitrogen (85%) operating at 16kW. The thickness of the coating thus obtained was about 23 nm as measured by cross-sectional transmission electron microscopy. Pretreatment, acrylate coating and crosslinking and oxynitride deposition took place sequentially in a single pass. The web direction was reversed and aluminum doped zinc oxide (AZO) layer and Silver-Gold (AgAu) alloy layer were deposited by DC sputtering process to obtain less than 3 nm AZO and about 12 nm AgAu, respectively. The web direction was reversed and a second AZO layer was deposited. The AZO layer was less than 3 nm.

EX-5 was prepared by coating the HC-2 precursor on the substrate prepared in CE-4 in a roll-to-roll die coating process operating at 10 ft/min. (3 m/min.). Solution flow rate used was 1.65 cm3/min. and the coating width was 4 inches (10.2 cm). The dried coating was UV cured using an H-bulb, (obtained from Fusion UV System Inc.) operating at 300 W/inch (118 W/cm) power.

EX-6 was prepared as described in CE-4 except that a second acrylate layer (94 % SARTOMER SR833, 6 % CN147, and 1 % IRGACURE 184) was deposited on the substrate prepared as described in CE-4. The second acrylate layer was estimated to be 80 nm thick. The second acrylate layer was then cross-linked using e-beam gun operating at 7kV and 5 mA thus forming a hard coat.

Samples prepared according to CE-1, CE-2 and EX-3 to EX-6 were tested using the test methods described above. Table 3, below, summarizes the test results.

**Table 3.**

| Example | Estimated thickness of hardcoat (nm) | Visible Light Transmittance (%) | Emissivity | Reflected Color | | | Corrosion Rating | | | Linear Scratch Rating | Shading Coefficient |
|---|---|---|---|---|---|---|---|---|---|---|---|
| | | | | L* | a* | b* | 5% NaCl | 1% (NH₄)₂ S | 1% Acetic Acid | | |
| CE-1 | >1800 | 71.2 | 0.13 | 54.8 | 7.1 | 15.4 | 0 | 0 | 0 | 1-2 | 0.56 |
| CE-2 | None | 75.8 | 0.06 | | | | | | | | 0.54 |
| EX-3 | 100 | 74.1 | 0.06 | | | | | | | | 0.53 |
| CE-4 | 20 | 70.9 | 0.19 | 54.4 | 5.6 | 9.0 | NA | 10 | 6 | 4 | |
| EX-5 | 165 | 74.9 | 0.20 | 50.1 | -0.2 | 0.5 | 0 | 0 | 2 | 0 | |
| EX-6 | 80 | 82 | 0.17 | 32.6 | 7.8 | 9.2 | 0 | 5 | 4 | 1 | |

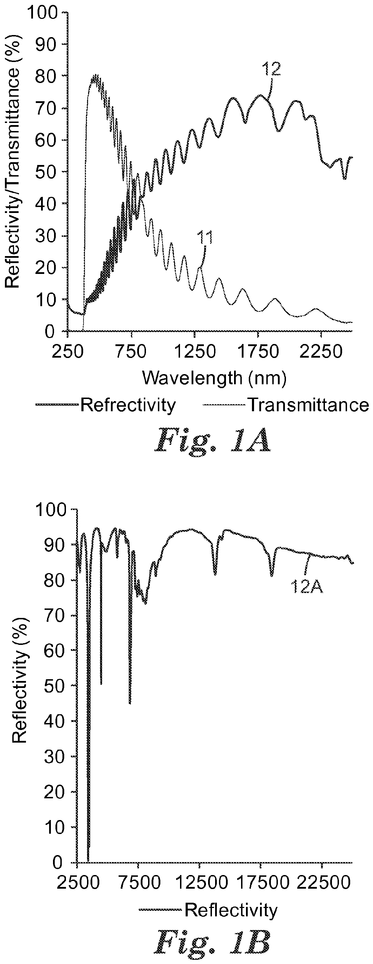

FIGS. 1A and 1B show the transmittance 11 and reflectivity 12 and 12A, respectively, of CE-1 versus wavelength, CE-2, and EX-3, respectively, versus wavelength.

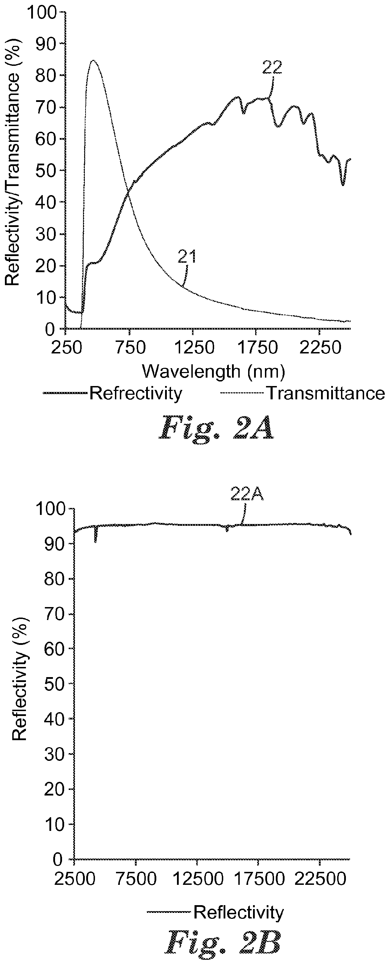

FIGS. 2A and 2B show the transmittance 21 and reflectivity 22 and 22A, respectively, of CE-2 versus wavelength.

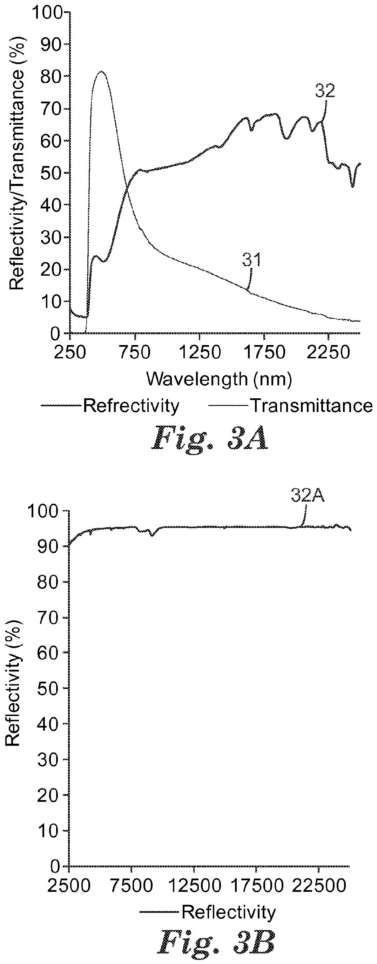

FIGS. 3A and 3B show the transmittance 31 and reflectivity 32 and 32A, respectively, of EX-3 versus wavelength.

### Examples 7 to 13 (EX-7 to EX-13)

EX-7 to EX-13 were prepared as described for EX-3 above, except that the substrate was that prepared as described in CE-4 and the hardcoat precursor was varied as summarized in Table 4, below. The EX-7 to EX-13 samples were tested using the test methods described above and the test results are summarized in Table 4, below.

**Table 4.**

| Example | Hardcoat precursor | Estimated hardcoat thickness (nm) | Visible Light Transmittance (%) | Emissivity | Reflected Color | | | Corrosion Rating | | | Linear Scratch Resistance |
|---|---|---|---|---|---|---|---|---|---|---|---|
| | | | | | L | a* | b* | 5% NaCl | 1% Ammonium Sulfide | 1% Acetic Acid | |
| EX-7 | HC-3 | 32 | 75.6 | 0.13 | 48.78 | -0.14 | 0.1 | 0 | 0 | 3 | 1 |
| EX-8 | HC-3 | 100 | 70.0 | 0.14 | 57.48 | 11.66 | 42.96 | 1 | 0 | 1 | 0 |
| EX-9 | HC-4 | 32 | 75.6 | 0.13 | 46.82 | 0.31 | 0.01 | 0 | 0 | 1 | 0 |
| EX-10 | HC-5 | 45 | 75.7 | 0.18 | 47.07 | -0.12 | -2.49 | 0 | 0 | 7 | 0 |
| EX-11 | HC-5 | 125 | 79.9 | 0.20 | 37.04 | 22.59 | -9.71 | 0 | 0 | 4 | 0 |
| EX-12 | HC-6 | 45 | 76.7 | 0.18 | 43.37 | 0.48 | -2.54 | 0 | 0 | 8 | 0 |
| EX-13 | HC-6 | 125 | 79.8 | 0.19 | 40.31 | 21.39 | 3.64 | 0 | 0 | 4 | 1 |

Foreseeable modifications and alterations of this disclosure will be apparent to those skilled in the art without departing from the scope and spirit of this invention. This invention should not be restricted to the embodiments that are set forth in this application for illustrative purposes.

## Claims

1. An article comprising:
a substrate having a first major surface, wherein the major surface has an emissivity not greater than 0.2; and
an exposed hardcoat on the first major surface, the exposed hardcoat comprising binder, wherein the binder comprises surfactant, and,
wherein the exposed hardcoat has a thickness less than 200 nanometers and has a scratch rating of not greater than 1 as determined by the Linear Abrasion Test in the Examples.

2. The article of claim 1, wherein the exposed hardcoat further comprises nanoparticles in a range from 40 to 95 weight percent, based on the total weight of the exposed hardcoat, and wherein the nanoparticles have an average particle diameter in a range from 2 nm to 100 nm.

3. The article of claim 2, wherein the ratio of average particle diameters of nanoparticles having an average particle diameter in the range from 2 nm to 20 nm to average particle diameters of nanoparticles having an average particle diameter in the range from 20 nm to 100 nm is in a range from 1:2 to 1:200.

4. The article of either claim 2 or 3, wherein the nanoparticles include at least one of SiO₂, ZrO₂, or Sb doped SnO₂ nanoparticles.

5. The article of any of claims 2 to 4, wherein the nanoparticles include modified nanoparticles.

6. The article of any preceding claim, wherein the binder comprises at least 10 percent surfactant, based on the total weight of the binder including the surfactant.

7. The article of any preceding claim, wherein the binder comprises cured acrylate.

8. The article of any preceding claim, wherein the low emissivity surface comprises at least one of a metal oxide, metal nitride, or metal oxynitride and at least one of silver, gold, palladium, or copper.

9. The article of any of preceding claim, further comprising a primer layer between the substrate and the exposed hardcoat.

10. The article of any preceding claim having a corrosion rating of not more than 3 (in some embodiments, not more than 2, not more than 1, or even 0) as determined by the Corrosion Test in the Examples.

11. A method of making the article of any of claims 2 to 10 comprising nanoparticles, the method comprising:
providing a substrate having a first major surface, wherein the major surface has an emissivity not greater than 0.2;
coating a mixture onto the first major surface, the mixture comprising a mixture comprising at least one of acrylic, (meth)acrylic oligomer, or monomer binder in a range from 5 weight % to 60 weight %, wherein the binder comprises surfactant, and nanoparticles in a range from 40 to 95 weight percent, based on the total volume of the mixture, and wherein the nanoparticles have an average particle diameter in a range from 2 nm to 100 nm; and
curing the at least one of acrylic, (meth)acrylic oligomer, or monomer binder to provide the article.

12. The method of claim 11, wherein the curing includes actinic radiation.

13. A method of making the article of any of claims 1 or 6 to 10 not including nanoparticles, the method comprising:
providing a substrate having a first major surface, wherein the major surface has an emissivity not greater than 0.2;
coating at least one of acrylic, (meth)acrylic oligomer, or monomer binder onto the major surface, wherein the binder comprises surfactant; and
curing the at least one of acrylic, (meth)acrylic oligomer, or monomer binder to provide the article.

14. The method of claim 13, wherein coating the monomer binder onto the major surface is done via vapor deposition of the monomer.

15. The method of claim 13, wherein the curing includes actinic radiation.

## Patentansprüche

1. Artikel, umfassend:
ein Substrat mit einer ersten Hauptoberfläche, wobei die Hauptoberfläche ein Emissionsvermögen von nicht mehr als 0,2 aufweist; und
eine freiliegende Hartbeschichtung auf der ersten Hauptoberfläche, wobei die freiliegende Hartbeschichtung Bindemittel umfasst, wobei das Bindemittel Tensid umfasst, und
wobei die freiliegende Hartbeschichtung eine Dicke von weniger als 200 Nanometern aufweist und eine Kratzereinstufung von nicht mehr als 1, wie durch den Linearabriebtest in den Beispielen bestimmt, aufweist.

2. Artikel nach Anspruch 1, wobei die freiliegende Hartbeschichtung ferner Nanoteilchen in einem Bereich von 40 bis 95 Gewichtsprozent, bezogen auf das Gesamtgewicht der freiliegenden Hartbeschichtung, umfasst und wobei die Nanoteilchen einen durchschnittlichen Teilchendurchmesser in einem Bereich von 2 nm bis 100 nm aufweisen.

3. Artikel nach Anspruch 2, wobei das Verhältnis von durchschnittlichen Teilchendurchmessern von Nanoteilchen mit einem durchschnittlichen Teilchendurchmesser im Bereich von 2 nm bis 20 nm zu durchschnittlichen Teilchendurchmessern von Nanoteilchen mit einem durchschnittlichen Teilchendurchmesser im Bereich von 20 nm bis 100 nm in einem Bereich von 1:2 bis 1:200 liegt.

4. Artikel nach einem der Ansprüche 2 oder 3, wobei die Nanoteilchen mindestens eines von SiO₂-, ZrO₂- oder Sb-dotierten SnO₂-Nanoteilchen einschließen.

5. Artikel nach einem der Ansprüche 2 bis 4, wobei die Nanoteilchen modifizierte Nanoteilchen einschließen.

6. Artikel nach einem der vorstehenden Ansprüche, wobei das Bindemittel mindestens 10 Prozent Tensid umfasst, bezogen auf das Gesamtgewicht des Bindemittels, das das Tensid einschließt.

7. Artikel nach einem der vorstehenden Ansprüche, wobei das Bindemittel gehärtetes Acrylat umfasst.

8. Artikel nach einem der vorstehenden Ansprüche, wobei die Oberfläche mit niedrigem Emissionsvermögen mindestens einem von einem Metalloxid, Metallnitrid oder Metalloxynitrid und mindestens eines von Silber, Gold, Palladium oder Kupfer umfasst.

9. Artikel nach einem der vorstehenden Ansprüche, ferner umfassend eine Primerschicht zwischen dem Substrat und der freiliegenden Hartbeschichtung.

10. Artikel nach einem der vorstehenden Ansprüche mit einer Korrosionseinstufung von nicht mehr als 3 (in einigen Ausführungsformen nicht mehr als 2, nicht mehr als 1 oder sogar 0), wie durch den Korrosionstest in den Beispielen bestimmt.

11. Verfahren zum Herstellen des Artikels nach einem der Ansprüche 2 bis 10, der Nanoteilchen umfasst, wobei das Verfahren Folgendes umfasst:
Bereitstellen eines Substrats mit einer ersten Hauptoberfläche, wobei die Hauptoberfläche ein Emissionsvermögen von nicht mehr als 0,2 aufweist;
Auftragen einer Mischung auf die erste Hauptoberfläche, wobei die Mischung eine Mischung umfasst, die mindestens eines von Acryl-, (Meth)acryl-Oligomer oder -Monomerbindemittel in einem Bereich von 5 Gew.-% bis 60 Gew.-% umfasst, wobei das Bindemittel Tensid und Nanoteilchen in einem Bereich von 40 bis 95 Gewichtsprozent, bezogen auf das Gesamtvolumen der Mischung, umfasst und wobei die Nanoteilchen einen durchschnittlichen Teilchendurchmesser in einem Bereich von 2 nm bis 100 nm aufweisen; und
Härten des mindestens einen von Acryl-, (Meth)acryl-Oligomer oder -Monomerbindemittel, um den Artikel bereitzustellen.

12. Verfahren nach Anspruch 11, wobei das Härten aktinische Strahlung einschließt.

13. Verfahren zum Herstellen des Artikels nach einem der Ansprüche 1 oder 6 bis 10, der keine Nanoteilchen umfasst, wobei das Verfahren Folgendes umfasst:
Bereitstellen eines Substrats mit einer ersten Hauptoberfläche, wobei die Hauptoberfläche ein Emissionsvermögen von nicht mehr als 0,2 aufweist;
Auftragen von mindestens einem von Acryl-, (Meth)acryl-Oligomer oder -Monomerbindemittel auf die Hauptoberfläche, wobei das Bindemittel Tensid umfasst; und
Härten des mindestens einen von Acryl-, (Meth)acryl-Oligomer oder -Monomerbindemittel, um den Artikel bereitzustellen.

14. Verfahren nach Anspruch 13, wobei das Auftragen des Monomerbindemittels auf die Hauptoberfläche durch Aufdampfen des Monomers erfolgt.

15. Verfahren nach Anspruch 13, wobei das Härten aktinische Strahlung einschließt.

## Revendications

1. Article comprenant :
un substrat ayant une première surface principale, dans lequel la surface principale a une émissivité ne dépassant pas 0,2 ; et
un revêtement dur exposé sur la première surface principale, le revêtement dur exposé comprenant un liant, dans lequel le liant comprend un agent tensioactif, et,
dans lequel le revêtement dur exposé a une épaisseur inférieure à 200 nanomètres et a une notation de rayure ne dépassant pas 1 telle que déterminée par le test d'abrasion linéaire dans les exemples.

2. Article selon la revendication 1, dans lequel le revêtement dur exposé comprend en outre des nanoparticules dans une plage allant de 40 à 95 pour cent en poids, sur la base du poids total du revêtement dur exposé, et dans lequel les nanoparticules ont un diamètre moyen de particule dans une plage allant de 2 nm à 100 nm.

3. Article selon la revendication 2, dans lequel le rapport des diamètres moyens de particule des nanoparticules ayant un diamètre moyen de particule dans la plage allant de 2 nm à 20 nm aux diamètres moyens de particule des nanoparticules ayant un diamètre moyen de particule dans la plage allant de 20 nm à 100 nm est dans une plage de 1:2 à 1:200.

4. Article selon la revendication 2 ou la revendication 3, dans lequel les nanoparticules incluent au moins l'une parmi des nanoparticules de SiO₂, de ZrO₂, ou de SnO₂ dopé par Sb.

5. Article selon l'une quelconque des revendications 2 à 4, dans lequel les nanoparticules incluent des nanoparticules modifiées.

6. Article selon une quelconque revendication précédente, dans lequel le liant comprend au moins 10 pour cent d'agent tensioactif, sur la base du poids total du liant incluant l'agent tensioactif.

7. Article selon une quelconque revendication précédente, dans lequel le liant comprend de l'acrylate durci.

8. Article selon une quelconque revendication précédente, dans lequel la surface à faible émissivité comprend au moins l'un parmi un oxyde de métal, un nitrure de métal, ou un oxynitrure de métal et au moins l'un parmi l'argent, l'or, le palladium ou le cuivre.

9. Article selon l'une quelconque des revendications précédentes, comprenant en outre une couche d'apprêt entre le substrat et le revêtement dur exposé.

10. Article selon une quelconque revendication précédente, ayant une notation de corrosion ne dépassant pas 3 (dans certains modes de réalisation, pas plus de 2, pas plus de 1, ou même 0) telle que déterminée par le test de corrosion dans les exemples.

11. Procédé de fabrication de l'article selon l'une quelconque des revendications 2 à 10 comprenant des nanoparticules, le procédé comprenant :
la fourniture d'un substrat ayant une première surface principale, dans lequel la surface principale a une émissivité ne dépassant pas 0,2 ;
le revêtement d'un mélange sur la première surface principale, le mélange comprenant un mélange comprenant au moins l'un parmi un acrylique, un oligomère (méth)acrylique ou un liant monomère dans une plage allant de 5 % en poids à 60 % en poids, dans lequel le liant comprend un agent tensioactif, et des nanoparticules dans une plage allant de 40 à 95 pour cent en poids, sur la base du volume total du mélange, et dans lequel les nanoparticules ont un diamètre moyen de particule dans une plage allant de 2 nm à 100 nm ; et
le durcissement dudit au moins un parmi l'acrylique, l'oligomère (méth)acrylique, ou le liant monomère pour fournir l'article.

12. Procédé selon la revendication 11, dans lequel le durcissement inclut un rayonnement actinique.

13. Procédé de fabrication de l'article selon l'une quelconque des revendications 1 ou 6 à 10 n'incluant pas de nanoparticules, le procédé comprenant :
la fourniture d'un substrat ayant une première surface principale, dans lequel la surface principale a une émissivité ne dépassant pas 0,2 ;
le revêtement d'au moins l'un parmi un acrylique, un oligomère (méth)acrylique ou un liant monomère sur la surface principale, dans lequel le liant comprend un agent tensioactif ; et
le durcissement dudit au moins un parmi l'acrylique, l'oligomère (méth)acrylique, ou le liant monomère pour fournir l'article.

14. Procédé selon la revendication 13, dans lequel le revêtement du liant monomère sur la surface principale est fait par l'intermédiaire d'un dépôt en phase vapeur du monomère.

15. Procédé selon la revendication 13, dans lequel le durcissement inclut un rayonnement actinique.
